# EUROPEAN PATENT SPECIFICATION

(11) **EP 3 214 425 B1**
(45) Date of publication and mention of the grant of the patent: **18.09.2019**
(21) Application number: 15854737.2
(22) Date of filing: 27.07.2015
(51) Int. Cl.: G01N 15/06, G08B 17/107, G01N 21/53, G01N 15/00, G02B 5/00

(54) **PARTICLE DETECTION SENSOR, DUST SENSOR, SMOKE DETECTOR, AIR PURIFIER, VENTILATION FAN, AND AIR CONDITIONER**
PARTIKELERFASSUNGSSENSOR, STAUBSENSOR, RAUCHMELDER, LUFTREINIGER, LÜFTER UND KLIMAANLAGE
CAPTEUR DE DÉTECTION DE PARTICULES, CAPTEUR DE POUSSIÈRE, CAPTEUR DE FUMÉE, APPAREIL DE PURIFICATION DE L'AIR, VENTILATEUR SOUFFLANT, ET CONDITIONNEUR D'AIR

(30) Priority: 31.10.2014 JP 2014223805
(43) Date of publication of application: 06.09.2017
(73) Proprietor: Panasonic Intellectual Property Management Co., Ltd., Osaka-shi, Osaka 540-6207 (JP)
(72) Inventor: KIRIHARA, Masao, Osaka-shi, Osaka 540-6207 (JP); NAKATANI, Tomohiro, Osaka-shi, Osaka 540-6207 (JP)
(74) Representative: Müller-Boré & Partner Patentanwälte PartG mbB
(86) International application number: PCT/JP2015/003750
(87) International publication number: WO 2016/067495

(56) References cited:
- EP-A1- 0 031 096
- EP-A1- 3 214 429
- GB-A- 2 505 858
- JP-A- H0 933 434
- JP-A- H08 233 736
- JP-A- H11 248 629
- JP-A- 2000 235 000
- JP-A- 2003 098 083
- JP-A- 2008 310 731
- JP-U- S 637 348

## Description

The present invention relates to a particle detection sensor and to devices which include the particle detection sensor, such as a dust sensor, smoke detector, air purifier, ventilation fan, and air conditioner.

Conventionally, scattered light particle detection sensors that detect particles by detecting light that has been scattered (scattered light) by airborne particles (aerosol) are known (for example, see Patent Literature (PTL) 1).

The scattered light particle detection sensor disclosed in PTL 1 is a photoelectric particle detection sensor including a light projecting element and a light receiving element disposed in a housing (optical chamber). This sensor introduces a gas to be measured into the housing, irradiates the introduced gas with light from the light projecting element, and detects the presence or absence of particles contained in the gas using the scattered light. For example, airborne dust, pollen, smoke, and PM 2.5 (fine particulate matter) can be detected. PTL 2 describes a light-scattering-type particle detection sensor comprising a plurality of light shielding walls, which protrude from the inner wall of the base substantially in parallel with each other. PTL 3 discloses a scattered light-type smoke detection apparatus comprising an attenuation plate with an irradiated face thereof being formed to have a sawtooth cross section, wherein individual teeth each have the same height and point towards the detection region.

### Patent Literature

PTL 1: Japanese Unexamined Patent Application Publication No. H11-248629
PTL 2: JP 2000/235000 A
PTL 3: GB 2 505 858 A

However, with the scattered light particle detection sensor, when light other than scattered light scattered by the particles (i.e., stray light) is incident on the light receiving element, this results in erroneous detection. Therefore, it is desirable to increase particle detection precision by preventing stray light from being incident on the light receiving element.

In view of this, the present invention has an object to provide, for example, a particle detection sensor capable of increasing particle detection precision.

In order to achieve the above object, a particle detection sensor according to one aspect of the present invention includes: a light projection system that outputs and focuses light on a detection area; a light reception system that receives scattered light, the scattered light being light from the light projection system that has been scattered by a particle in the detection area; and a first light trap disposed across the detection area from the light reception system. The first light trap includes: a first closed space having a first opening that opens toward the detection area; and a plurality of wedge-shaped protrusions disposed in the first closed space. The plurality of wedge-shaped protrusions each being a triangular columnar protrusion and including a base and a tip end. Among the plurality of wedge-shaped protrusions, the farther a wedge-shaped protrusion is located from the detection area, the less a distance between the base and the tip end of the wedge-shaped protrusion is, and the farther a wedge-shaped protrusion is located from the detection area, the farther away from the detection area the protruding direction of the wedge-shaped protrusions leads.

Moreover, a dust sensor according to one aspect of the present invention includes the particle detection sensor.

Moreover, a smoke detector according to one aspect of the present invention includes the particle detection sensor.

Moreover, an air purifier according to one aspect of the present invention includes the particle detection sensor.

Moreover, a ventilation fan according to one aspect of the present invention includes the particle detection sensor.

Moreover, an air conditioner according to one aspect of the present invention includes the particle detection sensor.

The particle detection sensor according to the present invention is capable of increasing particle detection precision.
FIG. 1 is a birds-eye perspective view of a particle detection sensor according to an embodiment of the present invention.
FIG. 2 is an exploded perspective view of a particle detection sensor according to an embodiment of the present invention.
FIG. 3 is a six-sided view of a particle detection sensor according to an embodiment of the present invention.
FIG. 4 is a cross sectional view illustrating the inside of the housing of a particle detection sensor according to an embodiment of the present invention.
FIG. 5 is a birds-eye perspective view illustrating the internal structure of the back cover of a particle detection sensor according to an embodiment of the present invention.
FIG. 6 is a birds-eye perspective view illustrating the internal structure of the front cover of a particle detection sensor according to an embodiment of the present invention.
FIG. 7 is a cross sectional view illustrating the structure of a dust blocking wall of a particle detection sensor according to an embodiment of the present invention.
FIG. 8 is a cross sectional view illustrating the structure of a dust blocking wall and a second light trap of a particle detection sensor according to an embodiment of the present invention.
FIG. 9 is a cross sectional view illustrating the structure of a first light trap of a particle detection sensor according to an embodiment of the present invention.
FIG. 10 illustrates paths of light emitted from the light projection system of a particle detection sensor according to an embodiment of the present invention.
FIG. 11 illustrates paths of light trapped by the second light trap of a particle detection sensor according to an embodiment of the present invention.
FIG. 12 illustrates different paths of light trapped by the second light trap of a particle detection sensor according to an embodiment of the present invention.
FIG. 13 illustrates paths of light trapped by the first light trap of a particle detection sensor according to an embodiment of the present invention.
FIG. 14 is a cross sectional view illustrating the inside of the housing of a particle detection sensor according to variation of an embodiment of the present invention.
FIG. 15 is an external view of a smoke detector including a particle detection sensor according to an embodiment of the present invention.
FIG. 16 is an external view of an air purifier including a particle detection sensor according to an embodiment of the present invention.
FIG. 17 is an external view of a ventilation fan including a particle detection sensor according to an embodiment of the present invention.
FIG. 18 is an external view of an air conditioner including a particle detection sensor according to an embodiment of the present invention.

Hereinafter, for example, a particle detection sensor according to an embodiment of the present invention will be described with reference to the drawings. Note that the embodiment described below shows a specific, preferred example of the present invention. The numerical values, shapes, materials, elements, the arrangement and connection of the elements, etc., indicated in the following embodiment are mere examples, and therefore are not intended to limit the present invention. Therefore, among the elements in the following embodiment, those not recited in any of the independent claims defining the most generic part of the present invention are described as optional elements.

Note that the respective figures are schematic diagrams and are not necessarily precise illustrations. Additionally, like structural elements share like reference numbers.

### (Particle Detection Sensor)

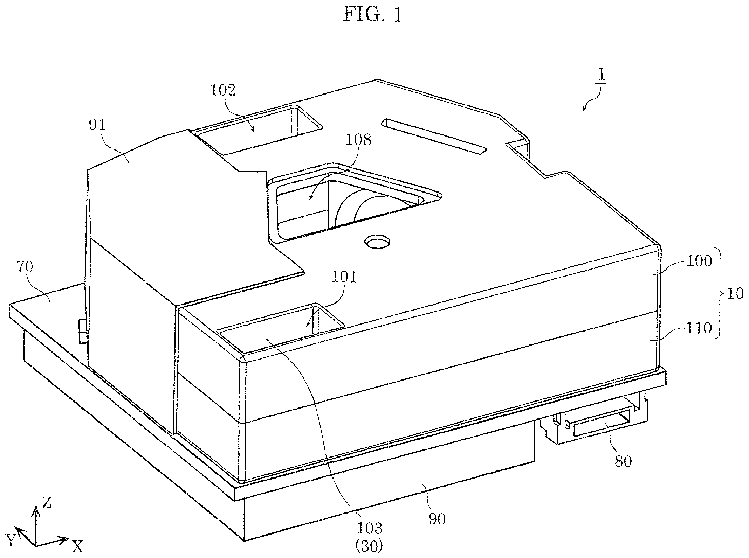

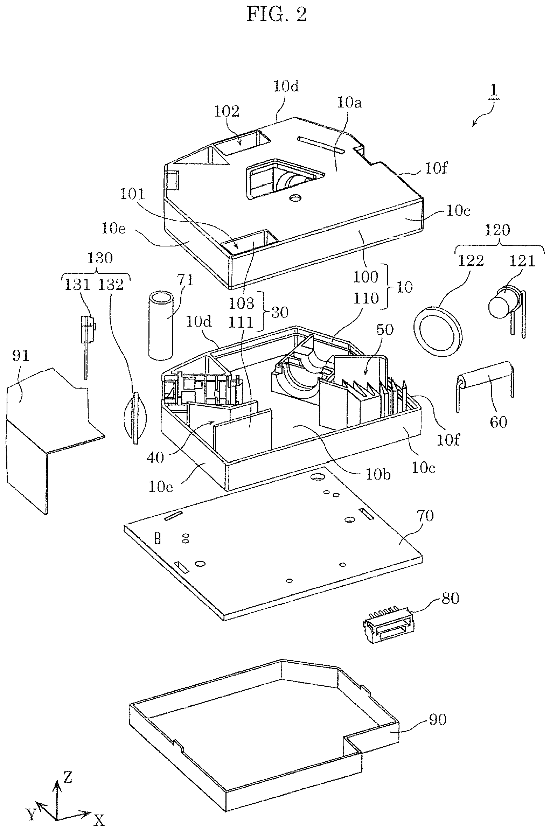

First, the particle detection sensor according to this embodiment will be outlined with reference to FIG. 1 through FIG. 6.

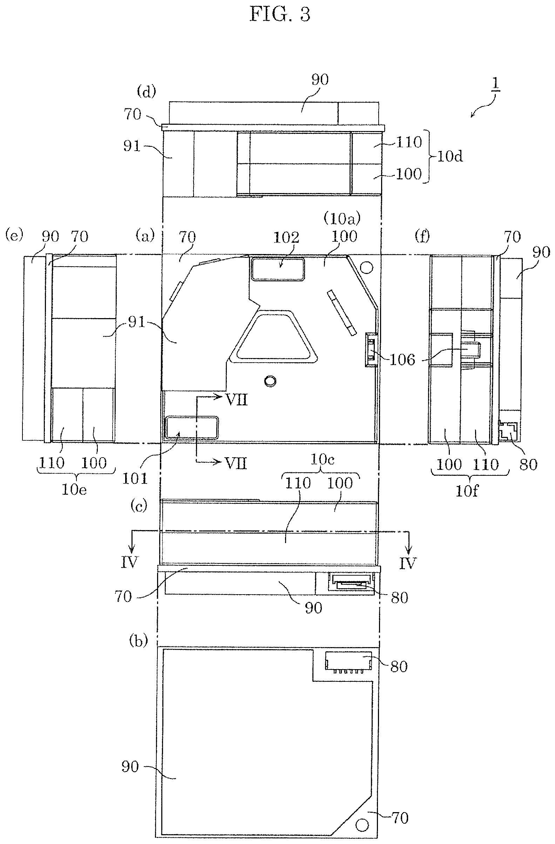

FIG. 1 through FIG. 3 illustrate a birds-eye perspective view, an exploded perspective view, and a six-sided view, respectively, of particle detection sensor 1 according to this embodiment. More specifically, in FIG. 3, (a) is a front view of particle detection sensor 1, (b) is a rear view, (c) is a bottom view, (d) is a top view, (e) is a left view, and (f) is a right view.

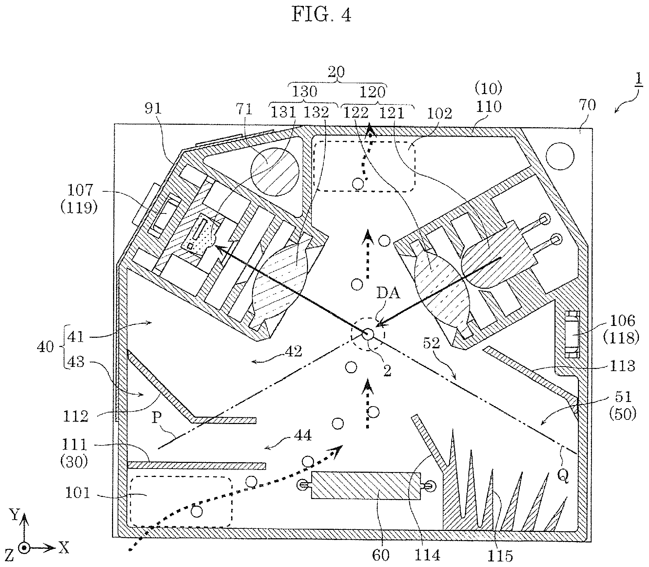

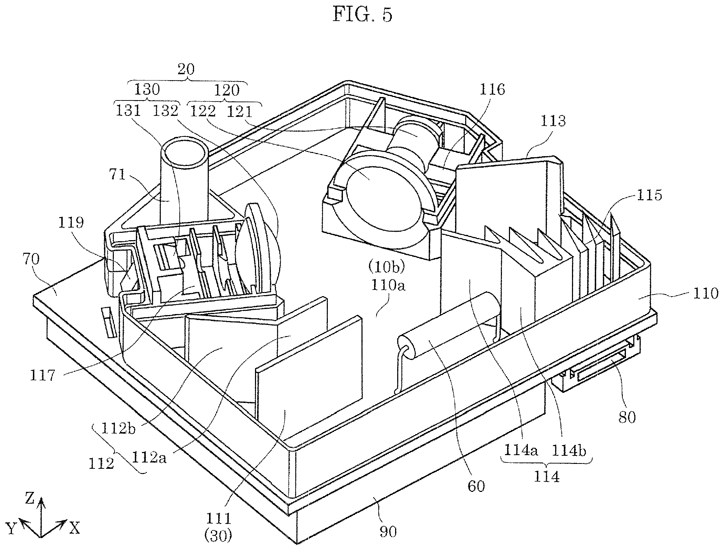

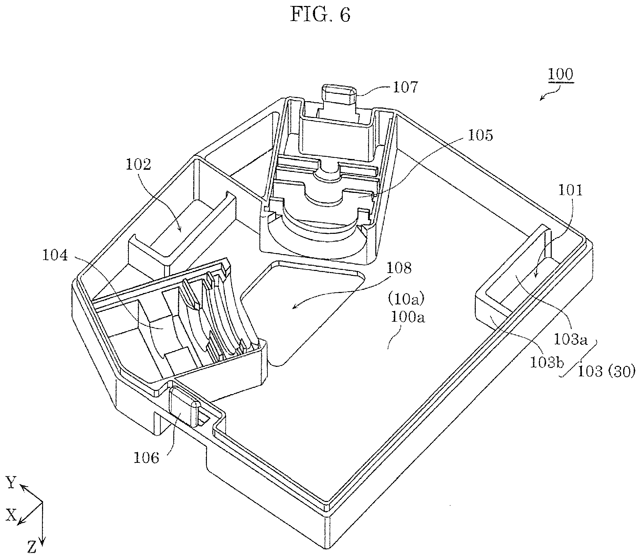

FIG. 4 is a cross sectional view illustrating the interior of housing 10 of particle detection sensor 1 according to this embodiment. More specifically, FIG. 4 is a cross sectional view taken along line IV-IV in (c) in FIG. 3. FIG. 5 and FIG. 6 are birds-eye perspective views illustrating the interior structures of back cover 110 and front cover 100, respectively.

Particle detection sensor 1 is disposed such that inlet 101 is located below outlet 102. More specifically, particle detection sensor 1 is disposed such that the Y axis direction indicated in FIG. 1 points vertically upward. Note that particle detection sensor 1 is a low-profile, approximate cuboid, and the X and Y axis directions correspond to the two directions parallel to two intersecting edges of the cuboid. Moreover, the Z axis direction corresponds to the thickness direction of particle detection sensor 1. In this embodiment, particle detection sensor 1 has a size that fits within a X: 52 mm, Y: 45 mm, Z: 22 mm space.

As indicated in FIG. 1 and FIG. 4, particle detection sensor 1 is a photoelectric particle detection sensor including housing 10 and optical system 20 disposed inside housing 10. In this embodiment, particle detection sensor 1 is a scattered light particle detection sensor. More specifically, particle detection sensor 1 detects the presence or absence of particles 2 by optical system 20 emitting light into detection area DA in housing 10 and receiving scattered light scattered by particle 2 (aerosol) passing through detection area DA. Moreover, particle detection sensor 1 is not limited to the detection of the presence or absence of particles 2, and may detect the number of particles 2 or the size of particles 2, for example. Note that particles 2, which are the detection target of particle detection sensor 1, are, for example, fine dust, pollen, smoke, or PM2.5 particles that are 2 µm or smaller.

Housing 10 is a housing (case) that covers optical system 20 and detection area DA. Housing 10 covers optical system 20 and detection area DA so as to prevent optical system 20 and detection area DA from being irradiated with external light.

Housing 10 includes inlet 101 for introducing particles 2 into the interior of housing 10, and outlet 102 for expelling the introduced particles 2 out of housing 10. In this embodiment, as indicated by the bold, dotted arrows in FIG. 4, gas containing particles 2 enters through inlet 101, passes through the interior of housing 10 (for example, detection area DA), and then exits through outlet 102. Details regarding the structure of housing 10 will be described later.

Optical system 20 optically detects particles 2 that enter housing 10 through inlet 101 and pass through detection area DA covered by housing 10. In this embodiment, as illustrated in FIG. 4, optical system 20 includes light projection system 120 and light reception system 130 disposed such that their optical axes (optical axis P and optical axis Q) intersect one another in detection area DA covered by housing 10, and particles 2 that pass through detection area DA are detected using light output by light projection system 120. Light projection system 120 includes light projecting element 121 and projection lens 122. Light reception system 130 includes light receiving element 131 and light receiving lens 132. Details regarding the structure of optical system 20 will be described later.

Detection area (light scattering section) DA is an aerosol detection area (aerosol measurement section) for detecting particles 2 contained in the gas to be measured. In this embodiment, detection area DA is an area including an intersection point at which optical axis P of light projection system 120 and optical axis Q of light reception system 130 intersect. Detection area DA is, for example, 2 mm in diameter. The gas to be measured enters via inlet 101 of housing 10, travels through detection area DA, and then exits through outlet 102.

As illustrated in FIG. 1, FIG. 2, and FIG. 4, particle detection sensor 1 further includes dust blocking wall 30, light trap (second light trap) 40, light trap (first light trap) 50, heater device 60, circuit board 70, connector 80, shield cover 90, and shield cover 91.

Dust blocking wall 30 is a wall disposed between inlet 101 and detection area DA, and blocks dust larger than particles 2 from entering detection area DA. Here, the dust to be blocked from entering detection area DA is, for example, dust having a particle diameter of at least 2µm.

Moreover, dust blocking wall 30 is a wall disposed between inlet 101 and light trap 40, and is a gas guiding wall that guides the gas so as not to enter light trap 40. Details regarding the structure of dust blocking wall 30 will be described later.

Light trap 40 traps light that is output from light projection system 120 and passes through detection area DA. More specifically, light trap 40 absorbs light that enters light trap 40 so as to keep the light from escaping light trap 40. In this embodiment, light trap 40 includes a wedge-shaped closed space having a labyrinth structure.

Light trap 40 is one example of the second light trap, and is disposed across detection area DA from light projection system 120. More specifically, light trap 40 includes a plurality of openings 42 and 44, divides a path of light that is output from light projection system 120 and passes through detection area DA into a plurality of paths passing through each of the plurality of openings 42 and 44, and traps the light. Details regarding the structure of light trap 40 will be described later.

Light trap 50 traps light that is not trapped by light trap 40. For example, light trap 50 traps light that is output from light projection system 120 and does not pass through detection area DA, and traps light that enters light trap 40 and exits light trap 40.

Light trap 50 is one example of the first light trap, and is disposed across detection area DA from light reception system 130. Light trap 50 is, for example, a labyrinth structure including a plurality of wedge-shaped protrusions 115. Details regarding the structure of light trap 50 will be described later.

Heater device 60 is one example of an air flow generation unit that generates air flow in housing 10 by causing gas containing particles 2 that has entered via inlet 101 to flow through detection area DA. In this embodiment, heater device 60 is a heater that is disposed in the bottom portion of housing 10 and heats air. More specifically, as illustrated in FIG. 4, heater device 60 generates an upward air flow (flow of gas in the positive direction along the Y axis) in housing 10 by heating the gas containing particles 2, and guides the gas containing particles 2 to detection area DA. Heater device 60 is, for example, a low cost heater resistor. Note that in FIG. 4, the bold, dotted arrows indicate one example of the air flow.

Circuit board 70 is a printed-wiring circuit board on which a control circuit for particle detection sensor 1 is formed. For example, the control circuit controls the output of light by light projection system 120, the processing of an electric signal based on an optical signal received by light reception system 130, and heating of the gas by heater device 60. For example, the control circuit detects the presence or absence of particles 2, the size of particles 2, and the number of particles 2, and outputs the detection result to an external device via connector 80.

Circuit board 70 is, for example, a rectangular flat plate, has one major surface (front surface) fixed to housing 10. One or more circuit elements (circuit components) making up the control circuit are mounted on the other major surface (rear surface). Note that the electrode terminals of light projecting element 121, light receiving element 131, and heater device 60 (heater resistor) pass through back cover 110 of housing 10 and circuit board 70, and are soldered to the back surface of circuit board 70. With this, light projecting element 121, light receiving element 131, and heater device 60 (heater resistor) are each electrically connected to the control circuit, and are operationally controlled by the control circuit.

The plurality of circuit elements include, for example, a resistor, capacitor, coil, diode, or transistor. Electrolytic capacitor 71, which is one of the plurality of circuit elements, is provided on the front surface of circuit board 70 and disposed inside housing 10, as illustrated in FIG. 4 and FIG. 5.

This makes it possible to reduce the number of circuit elements disposed on the back side of circuit board 70 by effectively employing the space inside housing 10. This in turn makes it possible to reduce the size of the space allotted for circuit elements on the back side of circuit board 70, and reduce the size of shield cover 90. As a result, it is possible to reduce the overall size of particle detection sensor 1.

Connector 80 is a connector for connecting the control circuit (circuit board 70) of particle detection sensor 1 and an external control circuit or power circuit. Connector 80 is mounted to the back side of circuit board 70. For example, particle detection sensor 1 operates off power supplied from an external source via connector 80.

Shield cover 90 is a metal cover for protecting the control circuit from external noise. Shield cover 90 is attached to the back side of circuit board 70.

Shield cover 91 is a metal cover for protecting light receiving element 131 of light reception system 130 from external noise. As illustrated in (a), (d), and (e) in FIG. 3, shield cover 91 covers an area of the front surface, top surface, and left surface of housing 10, in which light receiving element 131 is disposed.

Note that shield cover 90 and shield cover 91 are, for example, tin plates that can easily be connected by, for example, soldering.

Hereinafter, each element included in particle detection sensor 1 will be described in detail.

### (Housing)

Housing 10 is the main body of particle detection sensor 1, and detection area DA, optical system 20, dust blocking wall 30, light trap 40, light trap 50, and heater device 60 are disposed in housing 10. In this embodiment, housing 10 is configured of two components: front cover 100 and back cover 110.

Housing 10 has light blocking properties. For example, at least the inner surfaces of housing 10 are painted black so housing 10 can absorb stray light. More specifically, the inner surfaces of housing 10 have a high absorbency with respect to light and specularly reflect light. Note that the inner surfaces of housing 10 may reflect a portion of the light in a scattering manner rather than specularly.

Here, stray light is light other than scattered light scattered by particle 2, and more specifically, is light that that is output by light projection system 120 and travels through housing 10 without being scattered by particle 2 in detection area DA. Moreover, stray light is not only light that has not been scattered by particle 2, but also includes light reflected off the lens surface of light projection system 120 and light that does not pass through detection area DA (light emitted substantially directly downward from light projection system 120). Moreover, stray light includes external light that has entered housing 10 via inlet 101 or outlet 102 from outside housing 10.

Housing 10 is, for example, injection formed using a resin material such as ABS resin. More specifically, front cover 100 and back cover 110 are each injection formed using a resin material and then assembled together to form housing 10. Here, for example, the inner surfaces of housing 10 can be made to be black by using a black pigment resin or a resin added with a black dye. Alternatively, the inner surfaces of housing 10 can be made to be black by applying a black paint to the inner surfaces after the injection forming process. Moreover, stray light can be absorbed by processing the inner surfaces of housing 10 to have a textured surface.

As illustrated in FIG. 1 through FIG. 3, housing 10 is a low profile polyhedron and includes front surface part 10a, rear surface part 10b, bottom surface part 10c, top surface part 10d, left surface part 10e, and right surface part 10f. More specifically, as illustrated in (a) in FIG. 3, housing 10 is a prismatic body whose bottom surface has a substantially seven-sided shape achieved by cutting the top right and top left corners of a rectangle.

Front surface part 10a, rear surface part 10b, bottom surface part 10c, top surface part 10d, left surface part 10e, and right surface part 10f form the front surface, rear surface, bottom surface, top surface, left surface, and right surface, respectively, of housing 10. Front surface part 10a is the bottom part of front cover 100, and rear surface part 10b is the bottom part of back cover 110. Bottom surface part 10c, top surface part 10d, left surface part 10e, and right surface part 10f are formed by assembling the peripheral parts of front cover 100 and back cover 110.

Front surface part 10a and rear surface part 10b have substantially the same shape, and more specifically, are substantially seven-sided flat plates, as illustrated in (a) in FIG. 3. Bottom surface part 10c is a substantially rectangular flat plate disposed perpendicular to front surface part 10a and rear surface part 10b. Top surface part 10d, left surface part 10e, and right surface part 10f are disposed perpendicular to front surface part 10a and rear surface part 10b, and as illustrated in (a) in FIG. 3, are plate-shaped components that bend inward relative to housing 10 in a plan view.

Note that this shape of housing 10 is one example, and housing 10 is not limited to this shape. For example, the bottom surface (front surface part 10a and rear surface part 10b) of housing 10 may be a rectangular cuboid and, alternatively, may be a circular column.

A side surface of housing 10 includes inlet 101 and outlet 102, as illustrated in FIG. 1. More specifically, inlet 101 and outlet 102 are provided in front surface part 10a of housing 10.

Inlet 101 is an opening of a predetermined shape and is provided in a side surface of housing 10, and gas containing particles 2 enters into housing 10 via this opening. For example, inlet 101 is, but not limited to, a substantially rectangular 5.5 mm x 12 mm opening. For example, inlet 101 may be a circular or elliptical opening.

In this embodiment, inlet 101 is not provided directly below detection area DA, but is provided in a bottom corner of front cover 100, as illustrated in FIG. 4. With this, external light entering through inlet 101 is not as likely to reach detection area DA and external light entering through inlet 101 can be kept from being incident on light receiving element 131 as stray light.

Outlet 102 is an opening of a predetermined shape and is provided in a side surface of housing 10, and gas containing particles 2 exits housing 10 via this opening. For example, outlet 102 is, but not limited to, a substantially rectangular 5 mm x 12 mm opening. For example, outlet 102 may be a circular or elliptical opening. The size of outlet 102 is substantially the same as the size of inlet 101.

In this embodiment, outlet 102 is provide directly above detection area DA and in the center of the upper portion of front cover 100, as illustrated in FIG. 4. With this, the air flow generated by heater device 60 can be smoothly expelled out through outlet 102.

Note that inlet 101 and outlet 102 are provided in front surface part 10a of housing 10, but are not limited to this example. For example, inlet 101 may be provided in rear surface part 10b, bottom surface part 10c, left surface part 10e, or right surface part 10f of housing 10. Moreover, outlet 102 may be provided in rear surface part 10b, top surface part 10d, left surface part 10e, or right surface part 10f of housing 10.

Housing 10 includes internal structures (for example, ribs of a predetermined shape) for forming dust blocking wall 30, light trap 40, and light trap 50. More specifically, as illustrated in FIG. 6, front cover 100 includes wall 103 standing upright on inner surface 100a. Moreover, as illustrated in FIG. 5, back cover 110 includes wall 111 standing upright on inner surface 110a. Wall 103 and wall 111 form dust blocking wall 30. Details regarding the structure of dust blocking wall 30 will be described later.

Back cover 110 further includes reflective wall 112, reflective wall 113, reflective wall 114, and a plurality of wedge-shaped protrusions 115 standing upright on inner surface 110a. Reflective wall 112 forms light trap 40 along with wall 111. Reflective wall 113, reflective wall 114, and wedge-shaped protrusions 115 form light trap 50. Details regarding each of these will be described later.

Moreover, front cover 100 includes light projection system holder 104 and light reception system holder 105. Similarly, back cover 110 includes light projection system holder 116 and light reception system holder 117. Light projection system holder 104 and light projection system holder 116 hold light projection system 120 when front cover 100 and back cover 110 are assembled together. Light reception system holder 105 and light reception system holder 117 hold light reception system 130 when front cover 100 and back cover 110 are assembled together. With this, light projection system 120 and light reception system 130 can form detection area DA in a predetermined location.

As illustrated in FIG. 6, front cover 100 includes engaging component 106 and engaging component 107. Moreover, as illustrated in FIG. 4 and FIG. 5, back cover 110 includes component to be engaged 118 and component to be engaged 119. When front cover 100 and back cover 110 are assembled together, engaging component 106 engages component to be engaged 118, and engaging component 107 engages component to be engaged 119. This fixes front cover 100 and back cover 110 together. Note that the locations, number, and shape of engaging component 106 and engaging component 107 as well as component to be engaged 118 and component to be engaged 119 are not limited to any specific example.

Front surface part 10a of housing 10 further includes cleaning window 108. More specifically, cleaning window 108 is a trapezoidal through-hole provided in the central region of front cover 100. Cleaning window 108 is provided to remove dust and grime attached to the inside of projection lens 122, light receiving lens 132, and housing 10. For example, the inside of housing 10 can be cleaned by inserting, for example, a cotton swab into housing 10 through cleaning window 108. When particle detection sensor 1 is operating, cleaning window 108 is covered with a covering component (not illustrated in the drawings) so external light does not reach detection area DA through cleaning window 108.

In this embodiment, wall 103, light projection system holder 104, light reception system holder 105, engaging component 106, and engaging component 107 are integrally formed with front cover 100. Moreover, wall 111, reflective wall 112, reflective wall 113, reflective wall 114, plurality of wedge-shaped protrusions 115, light projection system holder 116, light reception system holder 117, component to be engaged 118, and component to be engaged 119 are integrally formed with back cover 110.

### (Optical System)

As illustrated in FIG. 5, optical system 20 is disposed on back cover 110 of housing 10, and when sandwiched with front cover 100, is stored inside housing 10. As illustrated in FIG. 4, light projection system 120 and light reception system 130 are disposed such that their optical axes (optical axis P and optical axis Q) intersect.

Light projection system 120 outputs and focuses light on detection area DA. Light projection system 120 includes light projecting element 121 and projection lens 122.

Light projecting element 121 is a light source (light emitting element) that emits light of a predetermined wavelength, and is, for example, a solid-state light emitting element such as a light emitting diode (LED) or a semiconductor laser. The optical axis of light projecting element 121 is aligned with optical axis P of light projection system 120, and, for example, passes through detection area DA.

A light emitting element that emits, ultraviolet light, blue light, green light, red light, or infrared light can be used as light projecting element 121. In this case, light projecting element 121 may be configured to emit mixed waves of two or more wavelengths. In this embodiment, taking into account the scattering strength of the light scattered by particle 2, for example, a bullet-shaped LED that outputs light of a wavelength of from 600 nm to 800 nm, is used as light projecting element 121

Note that the shorter the wavelength of light emitted by light projecting element 121 is, the easier it is to detect small diameter particles. Moreover, the method of controlling the emission of light by light projecting element 121 is not limited to a particular method; light emitted by light projecting element 121 may be continuous or pulsed light achieved by driving light projecting element 121 with direct current. Moreover, the output magnitude (intensity) of light projecting element 121 may be temporally adjusted.

Projection lens 122 is disposed in front of light projecting element 121 and transmits light (light projection beam) from light projecting element 121 toward detection area DA. In other words, light from light projecting element 121 reaches detection area DA after passing through projection lens 122. Particles 2 passing through detection area DA scatter light from light projecting element 121.

Projection lens 122 is, for example, a condenser lens that condenses (focuses) light from light projecting element 121 onto detection area DA, and is, for example, a transparent resin lens made of polycarbonate (PC) or a glass lens. For example, the focal point of projection lens 122 is in detection area DA.

Note that in this embodiment, in order to reduce the size of particle detection sensor 1, the distance between light projection system 120 and detection area DA is shortened. Therefore, a lens having a short focal length is used as projection lens 122. Light intensely converged via the short focal length lens has a wide spread angle. As such, in this embodiment, in order for the spread light to be absorbed without striking light reception system 130, use of a light trap (more specifically, a closed space for reflecting light multiple times) is desired. Details will be described later.

Light reception system 130 receives scattered light, which is light from light projection system 120 that has been scattered by particle 2 in detection area DA. Note that in FIG. 4, the bold, solid arrows indicate one example of a path of light. Light reception system 130 includes light receiving element 131 and light receiving lens 132.

Light receiving element 131 receives at least a portion of scattered light, which is light from light projecting element 121 that has been scattered by particle 2 in detection area DA. Light receiving element 131 is, more specifically, a photoelectric conversion element that converts received light into an electric signal, such as a photodiode, photo IC diode, phototransistor, or a photomultiplier tube. The optical axis of light receiving element 131 is aligned with optical axis Q of light reception system 130, and, for example, passes through detection area DA.

Light receiving lens 132 is disposed between light receiving element 131 and detection area DA, and configured to focus light received from the detection area DA side onto light receiving element 131. More specifically, light receiving lens 132 is a condenser lens that condenses scattered light scattered by particle 2 in detection area DA onto light receiving element 131, and is, for example, a transparent resin lens made of, for example, PC, or a glass lens. For example, the focal point of light receiving lens 132 is in detection area DA and on the surface of light receiving element 131.

### (Dust Blocking Wall)

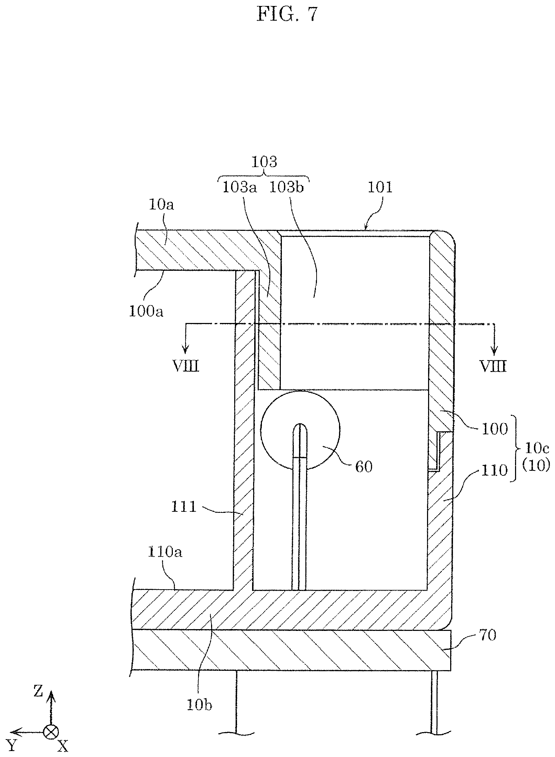

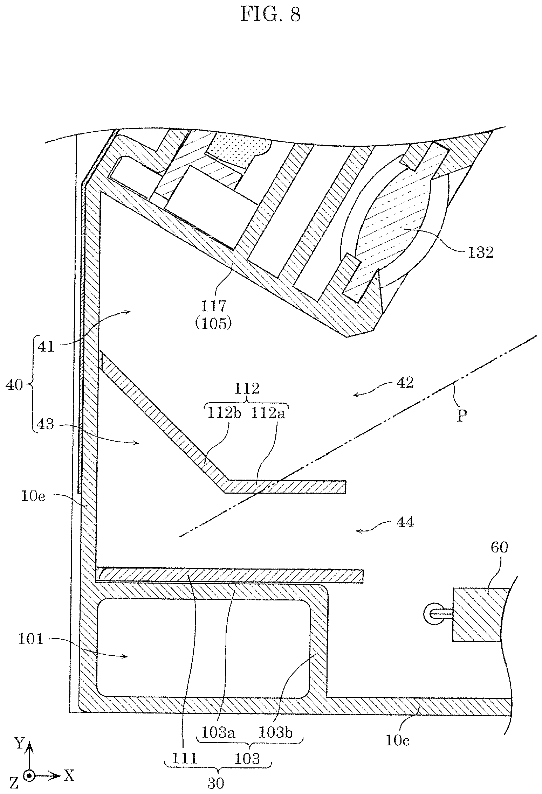

FIG. 7 is a cross sectional view illustrating the structure of dust blocking wall 30 according to this embodiment. More specifically, FIG. 7 is a cross sectional view taken along line VII-VII in (a) in FIG. 3. FIG. 8 is a cross sectional view illustrating the structure of dust blocking wall 30 and light trap (second light trap) 40 according to this embodiment. More specifically, FIG. 8 is a cross sectional view taken along line VIII-VIII in FIG. 7.

As illustrated in FIG. 4, dust blocking wall 30 is disposed in a location closer to inlet 101 than heater device 60 in housing 10. More specifically, at least a portion of dust blocking wall 30 is provided along the edge of inlet 101. In this embodiment, inlet 101 is a substantially rectangular opening, and at least a portion of dust blocking wall 30 is provided along the opening.

Moreover, at least a portion of dust blocking wall 30 is provided parallel to a direction intersecting the air flow generated by heater device 60. Since heater device 60 generates an upward air flow by heating the gas, at least a portion of dust blocking wall 30 is provided parallel to a direction orthogonally intersecting the upward air flow (i.e., parallel to a horizontal direction).

Moreover, dust blocking wall 30 is longer than the width of inlet 101. Here, the width of inlet 101 is the dimension along a direction intersecting the direction in which the gas flows. More specifically, the width of inlet 101 is a dimension along a direction intersecting the upward air flow generated by heater device 60, and is, for example, a dimension along the horizontal (X axis direction) direction. With this, external light entering through inlet 101 can be inhibited from reaching detection area DA. Note that dust blocking wall 30 has light blocking properties.

Moreover, dust blocking wall 30 is longer than the width of light trap 40. With this, dust blocking wall 30 can inhibit gas from entering light trap 40. The width of light trap 40 is the distance from the opening of light trap 40 to the deep part of light trap 40 along a direction parallel to a major surface of dust blocking wall 30. For example, the width of light trap 40 is the distance between left surface part 10e and the leading end of reflective wall 112.

In this embodiment, dust blocking wall 30 includes wall 103 standing upright on inner surface 100a and wall 111 standing upright on inner surface 110a. Wall 103 and wall 111 overlap one another, as illustrated in FIG. 7. Preferably, wall 103 and wall 111 contact one another. More specifically, wall 103 and wall 111 overlap one another in a view from the front (i.e., in a view along a Y axis direction). Preferably, wall 103 and wall 111 contact one another in the XZ plane. Note that inner surface 100a and inner surface 110a are inner surfaces of housing 10, and are two inner surfaces that face one another. More specifically, inner surface 100a is a surface on the inside of front surface part 10a, and inner surface 110a is a surface on the inside of rear surface part 10b.

As illustrated in FIG. 8, wall 103 is provided along an edge of inlet 101. In this embodiment, since inlet 101 is a substantially rectangular opening, wall 103 has an L-shape. More specifically, wall 103 includes a flat plate-shaped long side section 103a and a flat plate-shaped short side section 103b.

Long side section 103a is provided parallel to bottom surface part 10c. Moreover, long side section 103a stands upright from and perpendicular to left surface part 10e. Short side section 103b is provided parallel to left surface part 10e. Moreover, short side section 103b stands upright from and perpendicular to bottom surface part 10c. The heights of long side section 103a and short side section 103b (lengths in the Z axis direction) are shorter than the peripheral part of front cover 100 (i.e., part of bottom surface part 10c), as illustrated in FIG. 7.

As illustrated in FIG. 8, wall 111 is provided in the vicinity of inlet 101. More specifically, wall 111 is provided along long side section 103a of wall 103, and has a straight line shape. In this embodiment, wall 111 is a flat plate-shaped wall that stands upright from and perpendicular to rear surface part 10b (inner surface 110a) and left surface part 10e. In other words, in the X axis direction, wall 111 has one end connected to left surface part 10e and the other end is not connected to any inner surface of housing 10.

Here, as illustrated in FIG. 4, wall 111 is longer than the width of inlet 101. More specifically, as illustrated in FIG. 8, wall 111 is longer than the width of long side section 103a.

Dust blocking wall 30 connects two inner surfaces of housing 10 that face one another. As illustrated in FIG. 7, as a result of wall 103 and wall 111 overlapping one another, inner surface 100a and inner surface 110a contact one another. More specifically, wall 103 and wall 111 are provided such that there is no gap between inner surface 100a and between inner surface 110a in a view from the front (i.e., in a view along a Y axis direction).

In this embodiment, when front cover 100 and back cover 110 are assembled together, the leading end of wall 111 in the direction in which wall 111 stands (Z axis direction) is designed to abut inner surface 100a of front cover 100 such that no gap is formed. However, completely eliminating the gap is difficult.

As such, by overlapping wall 103 standing upright from inner surface 100a of front cover 100 and wall 111 standing upright from inner surface 110a of back cover 110, a gap between wall 103 and wall 111 in a view from the front can be eliminated. With this, dust blocking wall 30 can inhibit dust and external light from reaching detection area DA.

### (Light trap (Second Light Trap))

As illustrated in FIG. 4, light trap 40 includes a plurality of closed spaces 41 and 43, a plurality of openings 42 and 44, reflective wall 112, and dust blocking wall 30. Light trap 40 divides light from light projection system 120 that has passed through detection area DA using reflective wall 112.

The plurality of openings 42 and 44 are one example of the plurality of second openings, and open toward detection area DA such that light from light projection system 120 passes directly therethrough. More specifically, almost all of the light from light projection system 120 that has spread after passing through detection area DA passes through openings 42 and 44 without reflecting off an inner surface of housing 10 an internal structure in housing 10, for example. Optical axis P passes through opening 42.

Closed space 41 is one example of the second closed space, and is a closed space provided inside housing 10 for absorbing stray light. Closed space 41 includes opening 42 for introducing stray light. Note that as illustrated in FIG. 8, opening 42 corresponds to the gap between the end of reflective wall 112 (more specifically, reflective component 112a) and light reception system holders 105 and 117.

Closed space 41 and detection area DA are in communication via opening 42. In other words, a portion of light that passes through detection area DA enters closed space 41 via opening 42. Light entering closed space 41 is reflected multiple times in closed space 41 and attenuated by being absorbed by the side walls.

In this embodiment, as illustrated in FIG. 8, closed space 41 is a space defined by reflective wall 112, left surface part 10e, light reception system holders 105 and 117, front surface part 10a (inner surface 100a), and rear surface part 10b (inner surface 110a). The deep part of closed space 41 is wedge-shaped.

Note that "wedge-shaped" means, specifically, V-shaped, and triangular when viewed in a predetermined direction. The wedge-shaped closed space is a triangular pyramid or triangular columnar space. The wedge shaped protrusions to be described later are triangular columnar protrusions.

In this embodiment, the deep part of closed space 41 is a triangular columnar space defined by a bottom surface and top surface formed by front surface part 10a and rear surface part 10b, and two side surfaces formed by left surface part 10e and light reception system holders 105 and 117. In other words the connection portion of left surface part 10e and light reception system holders 105 and 117 is in the deepest part of closed space 41, and corresponds to the tip end of the wedge shape.

Note that the remaining side surface is a surface corresponding to the base of the wedge shape, and is positioned closer to opening 42 than the tip end of the wedge shape. Light that has passed through opening 42 travels along the remaining side surface, toward the tip end of the wedge shape.

Closed space 43 is one example of the second closed space, and is a closed space provided inside housing 10 for absorbing stray light. Closed space 43 includes opening 44 for introducing stray light. Note that as illustrated in FIG. 8, opening 44 corresponds to the gap between the end of reflective wall 112 (more specifically, reflective component 112a) and the end of dust blocking wall 30 (wall 111).

Closed space 43 and detection area DA are in communication via opening 44. In other words, a portion of light that passes through detection area DA enters closed space 43 via opening 44. Light entering closed space 43 is reflected multiple times in closed space 43 and attenuated by being absorbed by the side walls.

In this embodiment, as illustrated in FIG. 8, closed space 43 is a space defined by reflective wall 112, left surface part 10e, dust blocking wall 30 (wall 111), front surface part 10a (inner surface 100a), and rear surface part 10b (inner surface 110a). The deep part of closed space 43 is wedge shaped.

More specifically, the deep part of closed space 43 is a triangular columnar space defined by a bottom surface and top surface formed by front surface part 10a and rear surface part 10b, and two side surfaces formed by left surface part 10e and reflective component 112b. In other words the connection portion of left surface part 10e and reflective wall 112 is in the deepest part of closed space 43, and corresponds to the leading end of the wedge shape.

Note that the remaining side surface is a surface corresponding to the base of the wedge shape, and is positioned closer to opening 44 than the leading end of the wedge shape. Light that has passed through opening 42 travels along the remaining side surface, toward the tip end of the wedge shape.

Reflective wall 112 is one example of the first reflective wall, and reflects light that has passed through opening 42 to redirect the light to the deep part of closed space 41. Reflective wall 112 further reflects light that has passed through opening 44 to redirect the light to closed space 43.

Reflective wall 112 has a bend. More specifically, as illustrated in FIG. 8, reflective wall 112 includes flat plate-shaped reflective component 112a and flat plate-shaped reflective component 112b.

Reflective component 112a is one example of the first reflective component, and is disposed to intersect optical axis P of light projection system 120. More specifically, reflective component 112a is disposed so as to reflect light from light projection system 120 that travels along optical axis P such that the reflected light is further reflected by reflective component 112b. In this embodiment, reflective component 112a is disposed parallel to bottom surface part 10c.

Reflective component 112b is one example of the second reflective component, and is disposed at an angle relative to reflective component 112a. More specifically, reflective component 112b is disposed so as to reflect light reflected by reflective component 112a after traveling along optical axis P, toward the tip end of the wedge shape of closed space 41.

In this embodiment, reflective component 112b is disposed so as to form predetermined angles with each of reflective component 112a and left surface part 10e. Reflective component 112b and left surface part 10e form an acute angle, and the acute angle corresponds to the tip end of the wedge shape of closed space 43.

With the above configuration, a portion of the light (emitted light) from light projection system 120 that has passed through detection area DA subsequently passes through opening 42, is reflected by reflective wall 112 (and left surface part 10e and light reception system holders 105 and 117), and continues to closed space 41. Moreover, another portion of this emitted light passes through opening 44, is reflected by dust blocking wall 30 (and reflective wall 112 and left surface part 10e), and continues to closed space 43. Light entering closed spaces 41 and 43 absorbed and attenuated by the side walls each time it is reflected.

### (Light trap (First Light Trap))

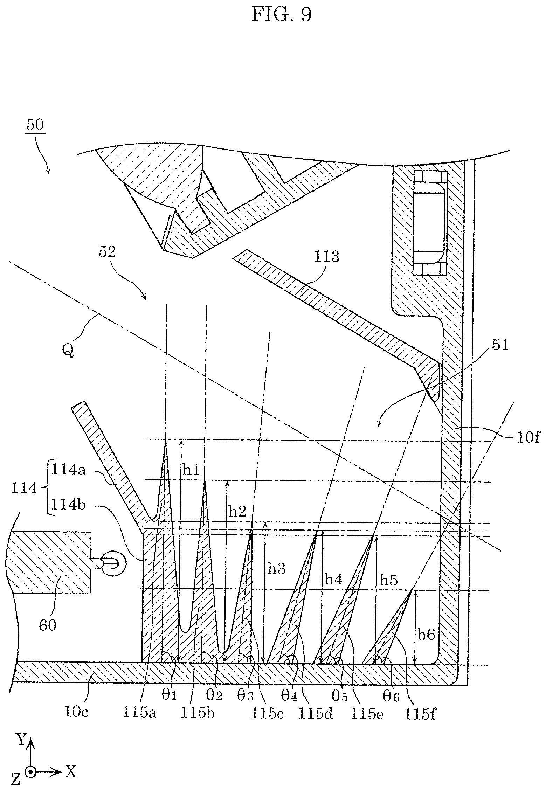

FIG. 9 is a cross sectional view illustrating the structure of light trap (first light trap) 50 according to this embodiment. More specifically, FIG. 9 is an enlarged view of the cross sectional view illustrated in FIG. 4.

As illustrated in FIG. 9, light trap 50 is a labyrinth structure including closed space 51, opening 52, reflective wall 113, reflective wall 114, and a plurality of wedge-shaped protrusions 115.

Closed space 51 is one example of the first closed space, and is a closed space provided inside housing 10 for absorbing stray light. Closed space 51 has opening 52 that opens toward detection area DA. Opening 52 is one example of the first opening, and intersects optical axis Q of light reception system 130. As illustrated in FIG. 9, opening 52 corresponds to the gap between the end of reflective wall 113 and the end of reflective wall 114 (more specifically, reflective component 114a).

More specifically, as illustrated in FIG. 9, closed space 51 is a space defined by reflective wall 113, reflective wall 114, bottom surface part 10c, right surface part 10f, front surface part 10a (inner surface 100a), and rear surface part 10b (inner surface 110a).

Closed space 51 and detection area DA are in communication via opening 52. In other words, if light is emitted from closed space 51 via opening 52, there is a chance that it could reach light reception system 130 after passing through detection area DA. Therefore, light trap 50 is formed so as to keep light that has entered closed space 51 via opening 52 from exiting via opening 52.

Reflective wall 113 is one example of the second reflective wall, and is disposed substantially parallel to optical axis Q of light reception system 130 and intersects the protruding direction of wedge-shaped protrusions 115. Reflective wall 113 is, for example, a flat plate-shaped wall, and stands upright from rear surface part 10b (inner surface 110a) and right surface part 10f. Reflective wall 113 reflects, toward wedge-shaped protrusions 115, light from light projection system 120 that has been reflected off the inner surface of housing 10. For example, reflective wall 113 reflects, toward wedge-shaped protrusions 115, light that passes through opening 52 in a substantially horizontal direction.

Reflective wall 114 reflects light from light projection system 120 not trapped by light trap 40 (i.e., stray light). Reflective wall 114 has one end in a predetermined direction (Y axis direction) connected to bottom surface part 10c, and the other end is not connected to any inner surface of housing 10. Reflective wall 114 is provided such that the other end points toward detection area DA. In this embodiment, reflective wall 114 has a bend. More specifically, as illustrated in FIG. 9, reflective wall 114 includes flat plate-shaped reflective component 114a and flat plate-shaped reflective component 114b.

Reflective component 114a is disposed such that a line extending along the wall surface passes through detection area DA. For example, reflective component 114a reflects stray light passing through opening 52 off its surface on the closed space 51 side, and absorbs the light in the space between reflective component 114a and wedge-shaped protrusion 115a. Moreover, for example, reflective component 114a reflects off its surface on the heater device 60 side, toward light trap 40, light reflected by bottom surface part 10c.

Reflective component 114b stands upright and perpendicular to rear surface part 10b (inner surface 110a) and bottom surface part 10c. For example, reflective component 114b reflects, toward light trap 40, light reflected by bottom surface part 10c.

Moreover, reflective wall 114 is a gas guiding wall that guides, toward detection area DA, gas guided by dust blocking wall 30 (gas guiding wall). Moreover, reflective wall 114 is a wall that is disposed between inlet 101 and light trap 50, and guides gas guided by dust blocking wall 30 so as to keep the gas from entering light trap 50. Here, since reflective component 114a is disposed pointing at detection area DA, gas can be efficiently guided toward detection area DA.

Wedge-shaped protrusions 115 are wedge-shaped walls disposed in closed space 51 and protruding inward from a side surface of housing 10. Wedge-shaped protrusions 115 stand upright from inner surface 110a of back cover 110 in closed space 51.

In this embodiment, as illustrated in FIG. 9, six wedge-shaped protrusions 115a through 115f are disposed so as to protrude from bottom surface part 10c in a predetermined direction. The protruding directions of the six wedge-shaped protrusions 115a through 115f each intersect optical axis Q of light reception system 130. Note that in FIG. 9, the dotted and dashed lines indicate the protruding directions of the wedge-shaped protrusions. The protruding directions are directions along a midline connecting the tip end of the wedge shape (triangle) to the midpoint of the base (bottom surface part 10c).

The six wedge-shaped protrusions 115a through 115f protrude such that the farther away from the detection area DA the wedge-shaped protrusion is located, the farther away from detection area DA the protruding direction leads. For example, as illustrated in FIG. 9, the six wedge-shaped protrusions 115a through 115f are disposed such that, in the order listed, distance from detection area DA (or opening 52) sequentially increases. Here, the protruding directions of wedge-shaped protrusions 115a and 115b are substantially perpendicular to bottom surface part 10c, while angles θ1 through θ6 between the relative protruding directions of wedge-shaped protrusions 115c through 115f and bottom surface part 10c decrease in the order listed. Angles θ1 through θ6 satisfy θ1≥ θ2 ≥ θ3 ≥ θ4 ≥ θ5 ≥ θ6.

In this embodiment, each of wedge-shaped protrusions 115a through 115f protrudes upward. For example, wedge-shaped protrusions 115a and 115b protrude substantially vertically upward. Wedge-shaped protrusions 115c through 115f protrude diagonally upward.

Moreover, heights h1 through h6 of the six wedge-shaped protrusions 115a through 115f, measured between the respective tip ends of the wedge shapes and the bases, decrease with increasing distance from detection area DA. In this embodiment, the base of each wedge-shaped protrusion 115a through 115f corresponds to bottom surface part 10c. Therefore, heights h1 through h6 are heights measured between the tip ends of wedge-shaped protrusions 115a through 115f and bottom surface part 10c, respectively. As illustrated in FIG. 9, heights h1 through h6 satisfy h1 ≥ h2 ≥ h3 ≥ h4 ≥ h5 ≥ h6.

### (Advantageous Effects, etc.)

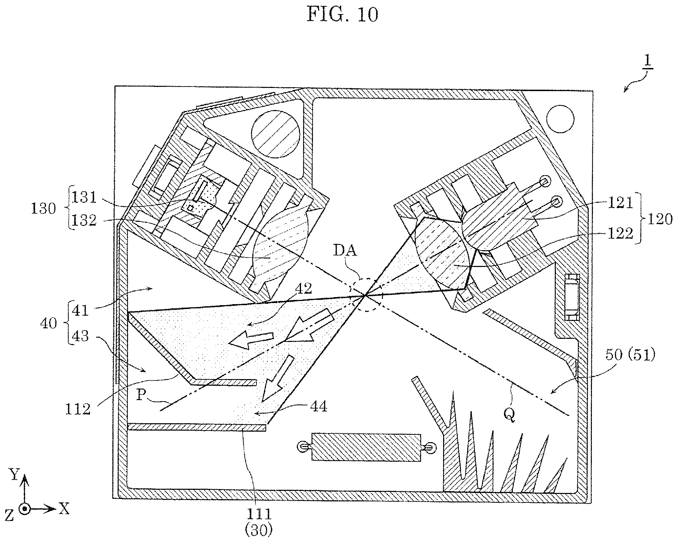

Particle detection sensor 1 according to this embodiment is designed to be compact so as to be applicable to various devices. First, problems that arise by giving particle detection sensor 1 a compact design will be described with reference to FIG. 10.

FIG. 10 illustrates paths of light emitted from light projection system 120 of particle detection sensor 1 according to this embodiment.

When housing 10 is made smaller, the distance between light projection system 120 and detection area DA decreases. Therefore, a lens having a short focal length needs to be used for projection lens 122. Light intensely converged via the short focal length lens has a wide spread angle. More specifically, as illustrated in FIG. 10, light that is not scattered by particle 2 upon passing through detection area DA has a wide spread angle. Note that in FIG. 10, the regions through which light from light projection system 120 passes is shaded with dots.

Light other than light scattered by particle 2 (more specifically, stray light) is a source of noise, and should be absorbed in housing 10 so as not to reach light reception system 130. However, as illustrated in FIG. 10, it is difficult to absorb stray light having a wide spread angle after passing through detection area DA.

In view of this, particle detection sensor 1 according to this embodiment includes: light projection system 120 that outputs and focuses light on detection area DA; light reception system 130 that receives scattered light, which is light from light projection system 120 that has been scattered by particle 2 in detection area DA; and light trap 40 disposed across detection area DA from light projection system 120. Light trap 40 includes a plurality of openings 42 and 44, divides, so as to pass through each of each of the plurality of openings 42 and 44, light that is output from light projection system 120 and passes through detection area DA, and traps the divided light.

In this way, stray light that spreads widely after passing through detection area DA is divided by reflective wall 112, as illustrated by the white arrows in FIG. 10. The light divided into a plurality of paths passes through openings 42 and 44 and enter closed spaces 41 and 43, and is absorbed after being reflected multiple times. With this, the widely spread stray light can be trapped efficiently by dividing the stray light into a plurality of paths passing through each of the plurality of openings 42 and 44.

For example, by dividing and trapping the stray light, the design freedom of the closed space for trapping the stray light increases. For example, a complicated structure is needed to trap stray light that travels in a variety of directions with a single closed space, but by dividing the stray light so as to enter a plurality of closed spaces, the closed spaces can be designed simply and with appropriate shapes. This makes it possible to effectively trap stray light with a simple structure.

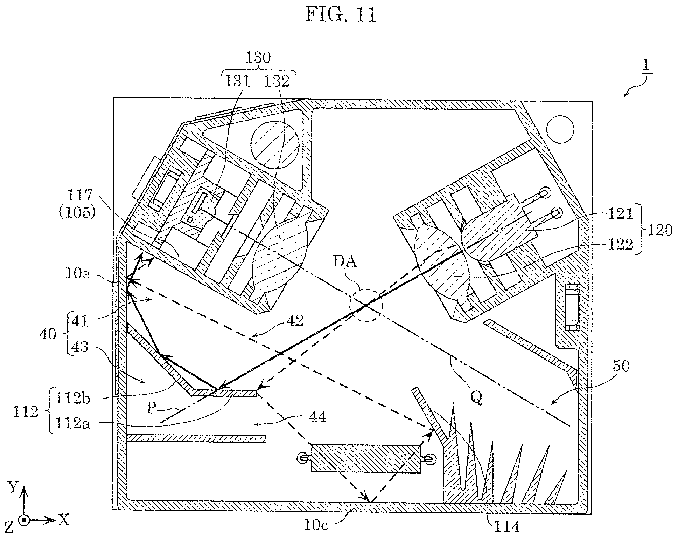

Hereinafter, the effective trapping of stray light by particle detection sensor 1 according to this embodiment will be described with reference to FIG. 11 through FIG. 13 while referencing examples of stray light.

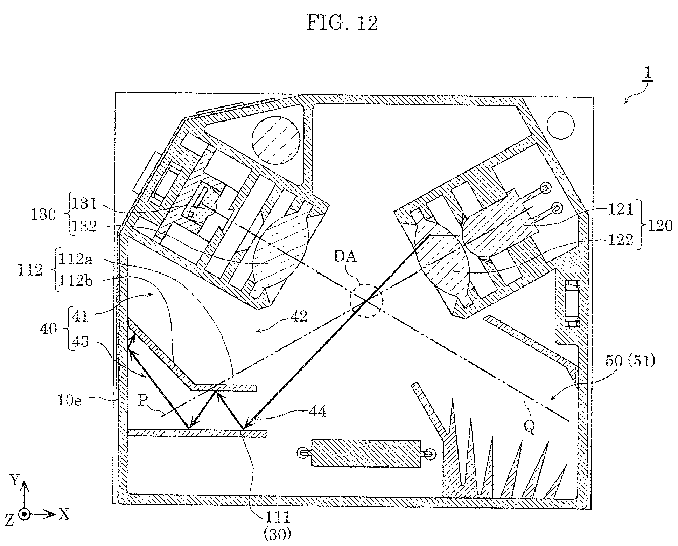

FIG. 11 and FIG. 12 illustrate paths of light trapped by light trap 40 according to this embodiment. More specifically, FIG. 11 illustrates, among the divided paths of light, light passing through opening 42 and trapped by closed space 41. FIG. 12 illustrates, among the divided paths of light, light passing through opening 44 and trapped by closed space 43.

For example, light travelling along optical axis P of light projection system 120 is reflected by reflective wall 112, as illustrated by the bold, solid arrows in FIG. 11. More specifically, first, the light is reflected by reflective component 112a and then subsequently reflected by reflective component 112b. In other words, reflective wall 112 is disposed so as to reflect light traveling along optical axis P at least two times.

Light reflected by reflective component 112b is then reflected by left surface part 10e and further reflected by light reception system holder 117 (and light reception system holder 105). In this way, light passing through opening 42 is reflected multiple times in closed space 41 so as to guide the light to the deep part of closed space 41 (toward the tip end of the wedge shape). Since light is attenuated and absorbed by the wall surfaces each time it is reflected, in the end, the light can be substantially completely absorbed by the wall surfaces.

Here, light traveling along optical axis P is particularly high energy light. Therefore, the light traveling along optical axis P can be efficiently absorbed by reflecting the light multiple times. Particle detection precision can be increased by keeping light traveling along optical axis P from traveling back toward detection area DA from closed space 41.

Moreover, as illustrated by the bold, solid arrows in FIG. 12, light passing through opening 44 is reflected by wall 111. Thereafter, the light is reflected by reflective component 112a, dust blocking wall 30, and left surface part 10e in the listed order, and travels to the deep part of closed space 43 (toward the tip end of the wedge shape).

Since light that has passed through opening 44 is attenuated and absorbed by the wall surfaces each time it is reflected, in the end, the light can be substantially completely absorbed by the wall surfaces.

In this way, for example, with particle detection sensor 1 according to this embodiment, light trap 40 further includes closed space 41 including opening 42, which is one of the plurality of openings, and reflective wall 112 that includes a bend and reflects light that has passed through opening 42 and guides the light to the deep part of closed space 41. Moreover, for example, reflective wall 112 includes flat plate-shaped reflective component 112a provided so as to intersect optical axis P of light projection system 120 and flat plate-shaped reflective component 112b provided diagonal to reflective component 112a. Among light output by light projection system 120, light traveling along optical axis P of light projection system 120 travels to the deep part of closed space 41 after reflecting off reflective component 112a and then reflective component 112b in the listed order.

This makes it possible to effectively guide stray light to closed space 41 using reflective wall 112 including a bend. In particular, light traveling along optical axis P, which is high energy light, can be guided into closed space 41 and repeatedly reflected and thereby efficiently attenuated. Therefore, the amount of stray light incident on light reception system 130 can be reduced, and the particle detection S/N ratio can be improved. This makes it possible to improve particle detection precision.

Moreover, for example, the deep part of closed space 41 is wedge shaped.

With this, the further light travels into the deep part of the wedge shape, the more times the light reflects, making it possible to efficiently attenuate the light.

Moreover, for example, light trap 40 divides light from light projection system 120 that has passed through detection area DA using reflective wall 112.

With this, since the function of dividing the light and the function of reflecting the divided light can be achieved with a single wall, the internal structure of housing 10 can be simplified Therefore, for example, unwanted reflection of light inside housing 10 is avoidable, and stray light can be inhibited from reaching light reception system 130. This makes it possible to improve particle detection precision.

Moreover, as illustrated by the bold, dotted arrows in FIG. 11, among light emitted by light projection system 120, there is light that does not pass through opening 42 or opening 44 and is reflected by the tip end of reflective component 112a. As illustrated in FIG. 11, this light is reflected by bottom surface part 10c and reflective wall 114 in the listed order, and then passes through opening 42 and continues traveling into closed space 41.

In this way, reflective wall 114 reflects light that has not passed through opening 42 or opening 44 to guide the light into light trap 40. With this, the amount of stray light incident on light reception system 130 can be reduced, and the particle detection S/N ratio can be improved.

As described above, the majority of the stray light is trapped by light trap 40. However, a portion of the stray light enters light trap 40 and then exits light trap 40. Also, there is some stray light that does not enter light trap 40. Light trap 50 traps this light (leak light).

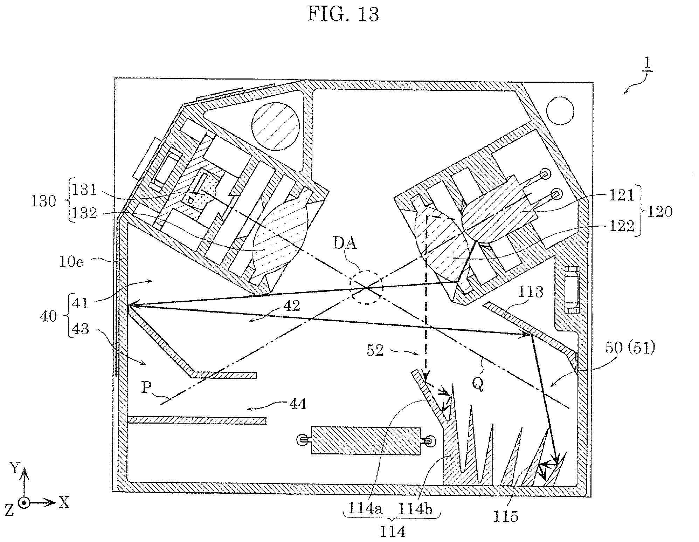

FIG. 13 illustrates paths of light trapped by light trap 50 according to this embodiment.

As illustrated by the bold, solid arrows in FIG. 13, light from light projection system 120 that passes through the outermost portion of projection lens 122 travels in a substantially horizontal direction and reaches light trap 40 after passing through opening 42, but is then reflected by left surface part 10e and exits through opening 42. This light passes through opening 52 of light trap 50 and is reflected toward the plurality of wedge-shaped protrusions 115 by reflective wall 113. Then, the light is reflected multiple times between adjacent wedge-shaped protrusions 115 and absorbed.

Moreover, as illustrated by the bold, dotted arrows in FIG. 13, light emitted substantially downward from light projection system 120 passes directly through opening 52 without passing through detection area DA, and is then reflected by reflective wall 114. Then, the light is reflected multiple times between reflective component 114a and wedge-shaped protrusions 115 and absorbed.

As described above, for example, particle detection sensor 1 according to this embodiment further includes light trap 50 that is disposed across detection area DA from light reception system 130 and traps light not trapped by light trap 40. Light trap 50 includes closed space 51 including opening 52 that opens toward detection area DA and a plurality of wedge-shaped protrusions 115 disposed in closed space 51.

Accordingly, light trap 50 makes it possible to trap light that exits light trap 40, as well as leak light, such as light that does not enter light trap 40. This makes it possible to improve particle detection precision since leak light incident on light reception system 130 can be reduced thereby improving the S/N ratio.

Moreover, for example, light trap 50 further includes reflective wall 113 disposed substantially parallel to optical axis Q of light reception system 130 and intersecting the protruding direction of wedge-shaped protrusions 115.

This makes it possible to reflect light toward the plurality of wedge-shaped protrusions 115 using reflective wall 113. For example, reflective wall 113 can reflect leak light traveling substantially horizontal inside housing 10. This makes it possible to improve particle detection precision since leak light incident on light reception system 130 can be reduced thereby improving the S/N ratio.

Moreover, for example, the protruding directions of wedge-shaped protrusions 115 intersect optical axis Q of light reception system 130.

This makes it easier for light reflected by reflective wall 113 to travel between adjacent wedge-shaped protrusions 115. Stated differently, the light more easily reflects multiple times between adjacent wedge-shaped protrusions 115. This makes it possible to improve particle detection precision since leak light incident on light reception system 130 can be reduced thereby improving the S/N ratio.

Moreover, heights of wedge-shaped protrusions 115, measured between the respective tip ends of the wedge shapes and the bases, decrease with increasing distance from detection area DA.

With this, light reflected by the tip ends of wedge-shaped protrusions 115 can be inhibited from traveling toward light reception system 130. For example, when light is reflected toward light reception system 130 by the tip end of wedge-shaped protrusion 115f, which is the shortest wedge-shaped protrusion, the light is reflected once again by adjacent wedge-shaped protrusion 115e. This makes it possible to improve particle detection precision since leak light incident on light reception system 130 can be reduced thereby improving the S/N ratio.

Moreover, the plurality of wedge-shaped protrusions 115 protrude such that, the further away from the detection area DA the wedge-shaped protrusion is positioned, the further away from detection area DA the protruding direction is.

This makes it easier for light reflected by reflective wall 113 to travel between adjacent wedge-shaped protrusions 115. Stated differently, the light more easily reflects multiple times between adjacent wedge-shaped protrusions 115. This makes it possible to improve particle detection precision since leak light incident on light reception system 130 can be reduced thereby improving the S/N ratio.

Moreover, for example, each of the plurality of wedge-shaped protrusions 115 protrudes upward.

With this, when dust enters light trap 50, the dust accumulates between the plurality of wedge-shaped protrusions 115. Therefore, even if stray light enters light trap 50 and is reflected and scattered by the dust, the reflected light can easily be reflected multiple times between adjacent wedge-shaped protrusions 115. Since the light reflected multiple times attenuates, the light can be inhibited from traveling toward light reception system 130 from light trap 50. Note that this means that the principle of trapping stray light that has entered light trap 50 by the plurality of wedge-shaped protrusions 115 can be reversely applied.

In this way, even if dust accumulates between the plurality of wedge-shaped protrusions 115, compared to a configuration in which the plurality of wedge-shaped protrusions 115 are not provided, light reflected by dust being incident on light reception system 130 can be inhibited. This makes it possible to further improve particle detection precision by particle detection sensor 1.

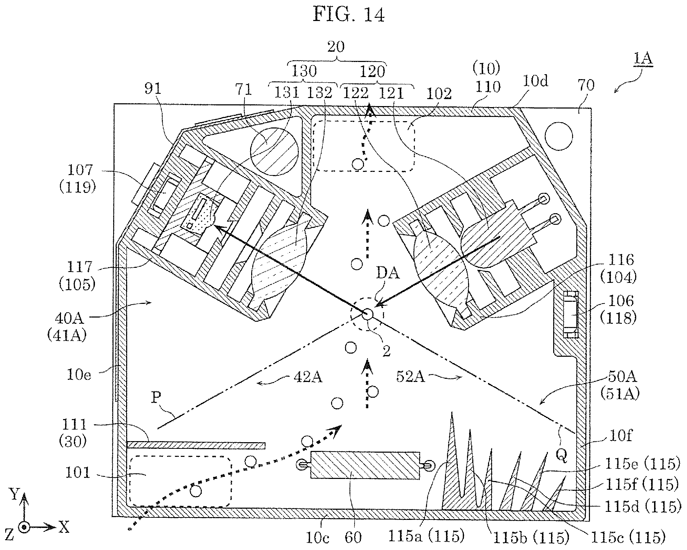

Next, a variation of particle detection sensor 1 according to the above embodiment will be described with reference to FIG. 14. Hereinafter, description will focus on the points of difference from the above embodiment, and description of points of similarity will be omitted or simplified.

FIG. 14 is a cross sectional view illustrating the inside of the housing of particle detection sensor 1A according to this variation. The cross section illustrated in FIG. 14 corresponds to a cross section taken along line IV-IV in (c) in FIG. 3, similar to FIG. 4.

Particle detection sensor 1A according to this variation differs from particle detection sensor 1 illustrated in FIG. 4 in that it does not include reflective wall 112, reflective wall 113, and reflective wall 114. More specifically, particle detection sensor 1A includes light trap 40A and light trap 50A in place of light trap 40 and light trap 50.

Light trap 40A does not include reflective wall 112. More specifically, light trap 40A includes only one closed space 41A. Closed space 41A includes only one opening 42A. Closed space 41A is a space defined by dust blocking wall 30 (wall 111), left surface part 10e, light reception system holders 105 and 117, front surface part 10a (inner surface 100a), and rear surface part 10b (inner surface 110a). Opening 42A corresponds to the space between the end of dust blocking wall 30 and the ends of light reception system holders 105 and 117.

The deep part of closed space 41A, that is to say, the part where left surface part 10e and light reception system holders 105 and 117 connect, is wedge shaped. The further light travels into the deep part of the wedge shape, the more times the light reflects, making it possible to efficiently attenuate stray light.

Light trap 50A does not include reflective wall 113 or reflective wall 114. More specifically, light trap 50A includes only one closed space 51A. Closed space 51A includes only one opening 52A. Closed space 51A is a space defined by bottom surface part 10c, right surface part 10f, light projection system holders 104 and 116, and wedge-shaped protrusion 115a. Opening 52A corresponds to the space between the tip end of wedge-shaped protrusions 115a, which is the wedge-shaped protrusion disposed closest to detection area DA, and the ends of light projection system holders 104 and 116.

As described above, with particle detection sensor 1A according to this variation, stray light can be efficiently trapped using the plurality of wedge-shaped protrusions 115. Note that since the internal structure of the housing of particle detection sensor 1 according to the above embodiment is more complex, the trapping of stray light is more effective. In contrast, with particle detection sensor 1A according to this variation, while the trapping of stray light is less effective than particle detection sensor 1, the particle detection precision is sufficiently high.

For example, with particle detection sensor 1A according to this variation, light trap 50A includes a plurality of wedge-shaped protrusions 115. Therefore, even though reflective wall 113 and reflective wall 114 are omitted, stray light can sufficiently be attenuated since the light reflects multiple times between the plurality of wedge-shaped protrusions 115.

Furthermore, in this variation, the plurality of wedge-shaped protrusions 115 decrease in height with increasing distance from detection area DA. Therefore, even though reflective walls 113 and 114 are omitted, light can easily travel between wedge-shaped protrusions 115 located the deep part (i.e., located farther from detection area DA). This makes it possible to further inhibit stray light from leaking from light trap 50A toward light reception system 130.

Moreover, with particle detection sensor 1A according to this variation, since the internal structure of housing 10 is simplified, maintenance, such as removing accumulated dust, is easy. Moreover, the amount of material used to form housing 10 can be reduced, thereby making it possible to manufacture particle detection sensor 1A at low cost.

Hereinbefore the particle detection sensor according to the present invention has been described based on an embodiment and a variation thereof, but the present invention is not limited to the above embodiment.

For example, in the above embodiment, dust blocking wall 30 is exemplified as, but not limited to, being configured of wall 103 and wall 111. For example, dust blocking wall 30 may be configured of wall 103 only or wall 111 only.

Moreover, for example, in the above embodiment, dust blocking wall 30 is provided parallel to bottom surface part 10c along the edge of inlet 101, but this example, is not limiting. Dust blocking wall 30 may be provided diagonal to bottom surface part 10c. For example, dust blocking wall 30 may be orthogonal to a line connecting inlet 101 and detection area DA. Moreover, dust blocking wall 30 may be curved rather than a flat plate.

Moreover, for example, dust blocking wall 30 may be disposed between heater device 60 and detection area DA.

Moreover, for example, in the above embodiment, light passing through detection area DA is exemplified as, but not limited to, being divided by two openings 42 and 44. It may be three or more openings. For example, a plurality of parallel flat plate-shaped light trap structures may be used as light trap 40. In other words, the gaps between the plurality of parallel flat plates correspond to the plurality of openings. The leading ends of the parallel flat plates may be tapered.

Moreover, for example, in the above embodiment, housing 10 is exemplified, but not limited to, being separable into front cover 100 and back cover 110. Housing 10 may be a single unit injection formed using a resin material and a mold.

Moreover, for example, in the above embodiment, reflective wall 112, reflective wall 113, reflective wall 114, and the plurality of wedge-shaped protrusions 115 are integrally formed with back cover 110, but this example is not limiting. At least one of reflective wall 112, reflective wall 113, reflective wall 114, and the plurality of wedge-shaped protrusions 115 may be integrally formed with front cover 100, and, alternatively, may be formed separately from either one of front cover 100 and back cover 110. Moreover, at least one of reflective wall 112, reflective wall 113, reflective wall 114, and the plurality of wedge-shaped protrusions 115 may be formed as a result of the walls forming front cover 100 and back cover 110 being assembled, similar to dust blocking wall 30.

Moreover, for example, in the above embodiment, wall 111 is exemplified, but not limited to, being a flat plate-shaped wall. For example, wall 111 may be a wedge-shaped wall (wedge-shaped protrusion) that protrudes inward in housing 10 from left surface part 10e. In other words, the end of wall 111 which is the end not connected to any side wall of housing 10 may be tapered. Note that the same applies to reflective wall 112, reflective wall 113, and reflective wall 114.

Moreover, for example, the arrangement of the elements provided on front cover 100 and back cover 110 are not limited to the above examples. For example, in the above embodiment, light projection system 120 and light reception system 130 are aligned in the horizontal direction, but they may be aligned in the up-and-down direction.

Moreover, for example, in the above embodiment, projection lens 122 and light receiving lens 132 are exemplified as the component that focuses light from light projecting element 121 and the component that focuses the light on light receiving element 131, but a reflective component, such as a focusing mirror, may be used.

Moreover, for example, in the above embodiment, particle detection sensor 1 is exemplified, but not limited to, being a scattered light particle detection sensor. Particle detection sensor 1 may be a photoelectric particle detection sensor, and, for example, when light projection system 120 and light reception system 130 are disposed opposite one another, light from light projection system 120 can be blocked when particles 2 pass through detection area DA to reduce the amount of light that reaches light reception system 130. As a result, the particle detection sensor can detect particles by detecting the amount of change (reduction) in light amount.

Moreover, for example, in the above embodiment, the medium (fluid) that contains the particles is exemplified as gas (air), but may be a liquid such as water.

Note that particle detection sensor 1 according to the above embodiment is applicable to various devices. For example, one aspect of the present invention can be realized as a dust sensor including particle detection sensor 1. The dust sensor is applicable to, for example, vacuum cleaners.

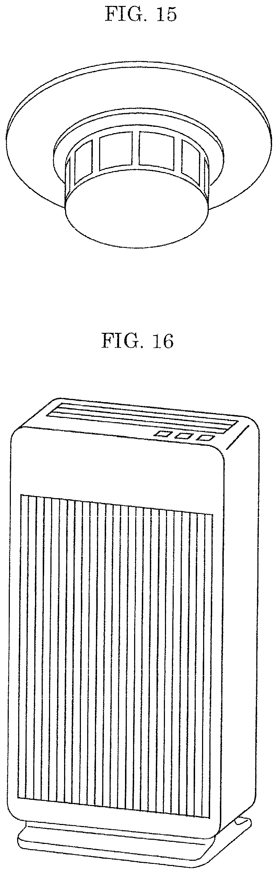

Moreover, for example, one aspect of the present invention can be realized as a smoke detector such as the one illustrated in FIG. 15. FIG. 15 is an external view of a smoke detector according to this variation. The smoke detector illustrated in FIG. 15 includes, for example, particle detection sensor 1.

Moreover, for example, one aspect of the present invention can be realized as an air purifier such as the one illustrated in FIG. 16. FIG. 16 is an external view of an air purifier according to this variation. The air purifier illustrated in FIG. 16 includes, for example, particle detection sensor 1.

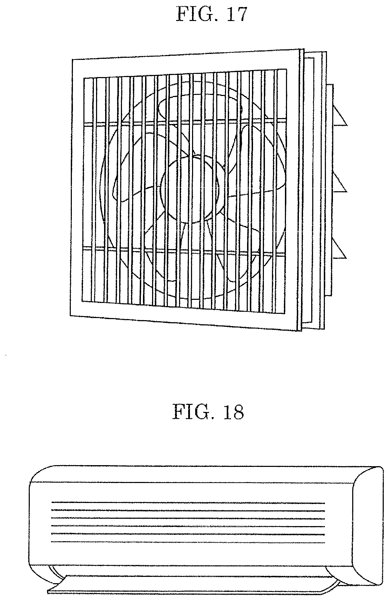

Moreover, for example, one aspect of the present invention can be realized as a ventilation fan such as the one illustrated in FIG. 17. FIG. 17 is an external view of a ventilation fan according to this variation. The ventilation fan illustrated in FIG. 17 includes, for example, particle detection sensor 1.

Moreover, for example, one aspect of the present invention can be realized as an air conditioner such as the one illustrated in FIG. 18. FIG. 18 is an external view of an air conditioner according to this variation. The air conditioner illustrated in FIG. 18 includes, for example, particle detection sensor 1.

When the vacuum cleaner, smoke detector, air purifier, ventilation fan, or air conditioner described above detect particles 2 using particle detection sensor 1 installed therein, it may simply state that particles 2 have been detected (for example, it may display it on a display or output an alarm sound). Alternatively, a fan may be controlled such as the turning on of a fan or the adjustment of the speed of the fan.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the scope of the claims.

### REFERENCE MARKS IN THE DRAWINGS

- 1, 1A: particle detection sensor
- 2: particles
- 40, 40A: light trap (second light trap)
- 41, 41A, 43: closed space (second closed space)
- 42, 42A, 44: opening (second opening)
- 50, 50A: light trap (first light trap)
- 51, 51: Aclosed space (first closed space)
- 52, 52A: opening (first opening)
- 112: reflective wall (first reflective wall)
- 112a: reflective component (first reflective component)
- 112b: reflective component (second reflective component)
- 113: reflective wall (second reflective wall)
- 115, 115a, 115b, 115c, 115d, 115e, 115: fwedge-shaped protrusions
- 120: light projection system
- 130: light reception system
- DA: detection area
- 115, 115a, 115b, 115c, 115d, 115e, 115f: wedge-shaped protrusions
- 120: light projection system
- 130: light reception system
- DA: detection area

## Claims

1. A particle detection sensor (1, 1A), comprising:
a light projection system (120) that outputs and focuses light on a detection area (DA);
a light reception system (130) that receives scattered light, the scattered light being light from the light projection system (120) that has been scattered by a particle in the detection area (DA); and
a first light trap (50, 50A) disposed across the detection area (DA) from the light reception system (130),
wherein the first light trap (50, 50A) includes:
a first closed space (51, 51A) having a first opening (52, 52A) that opens toward the detection area (DA); and
a plurality of wedge-shaped protrusions (115, 115a, 115b, 115c, 115d, 115e, 115f) disposed in the first closed space (51, 51A), the plurality of wedge-shaped protrusions (115, 115a, 115b, 115c, 115d, 115e, 115f) each being a triangular columnar protrusion and including a base and a tip end, and
among the plurality of wedge-shaped protrusions (115, 115a, 115b, 115c, 115d, 115e, 115f), the farther a wedge-shaped protrusion is located from the detection area (DA), the less a distance between the base and the tip end of the wedge-shaped protrusion is, and the farther a wedge-shaped protrusion is located from the detection area (DA), the farther away from the detection area (DA) the protruding direction of the wedge-shaped protrusion leads.

2. The particle detection sensor (1, 1A) according to claim 1, wherein
a protruding direction of each of the plurality of wedge-shaped protrusions (115, 115a, 115b, 115c, 115d, 115e, 115f) intersects an optical axis of the light reception system (130).

3. The particle detection sensor (1, 1A) according to claim 1 or 2, wherein each of the plurality of wedge-shaped protrusions (115, 115a, 115b, 115c, 115d, 115e, 115f) protrudes upward.

4. The particle detection sensor (1, 1A) according to any one of claims 1 to 3, further comprising
a second light trap (40, 40A) disposed across the detection area (DA) from the light projection system (120),
wherein the second light trap (40, 40A) includes a plurality of second openings (42, 42A, 44), divides, so as to pass through each of the plurality of second openings (42, 42A, 44), light that is output from the light projection system (120) and passes through the detection area (DA), and traps the divided light.

5. The particle detection sensor (1, 1A) according to claim 4, wherein
the second light trap (40, 40A) further includes:
a second closed space (41, 41A, 43) having a second opening (42, 42A, 44) among the plurality of second openings (42, 42A, 44); and
a first reflective wall (112) that has a bend and reflects light that has passed through the second opening (42, 42A, 44) to direct the light to a deep part of the second closed space (41, 41A, 43).

6. The particle detection sensor (1, 1A) according to claim 5, wherein
the deep part of the second closed space (41, 41A, 43) is wedge-shaped.

7. The particle detection sensor (1, 1A) according to claim 5 or 6, wherein
the second light trap (40, 40A) divides the light that is output from the light projection system (120) and passes through the detection area (DA) using the first reflective wall (112).

8. The particle detection sensor (1, 1A) according to any one of claims 5 to 7, wherein
the first reflective wall (112) includes:
a first reflective component (112a) that is a flat, plate-shaped component disposed intersecting an optical axis of the light projection system (120); and
a second reflective component (112b) that is a flat, plate-shaped component disposed diagonal to the first reflective component (112a), and
among the light output from the light projection system (120), light traveling along the optical axis of light projection system (120) travels to the deep part of the second closed space (41, 41A, 43) after being reflected by the first reflective component (112a) and the second reflective component (112b) in the listed order.

9. The particle detection sensor (1, 1A) according to any one of claims 1 to 8, wherein
the first light trap (50, 50A) further includes a second reflective wall (113) disposed intersecting the protruding direction of the plurality of wedge-shaped protrusions (115, 115a, 115b, 115c, 115d, 115e, 115f) and substantially parallel to the optical axis of the light reception system (130).

10. A dust sensor comprising the particle detection sensor (1, 1A) according to any one of claims 1 to 9.

11. A smoke detector comprising the particle detection sensor (1, 1A) according to any one of claims 1 to 9.

12. An air purifier comprising the particle detection sensor (1, 1A) according to any one of claims 1 to 9.

13. A ventilation fan comprising the particle detection sensor (1, 1A) according to any one of claims 1 to 9.

14. An air conditioner comprising the particle detection sensor (1, 1A) according to any one of claims 1 to 9.

## Patentansprüche

1. Teilchenerfassungssensor (1, 1A), umfassend:
ein Lichtprojektionssystem (120), das Licht auf einen Erfassungsbereich (DA) ausgibt und fokussiert;
ein Lichtempfangssystem (130), das gestreutes Licht empfängt, wobei das gestreute Licht Licht von dem Lichtprojektionssystem (120) ist, das von einem Teilchen in dem Erfassungsbereich (DA) gestreut wurde; und
eine erste Lichtfalle (50, 50A), die in dem Erfassungsbereich (DA) gegenüber des Lichtempfangssystems (130) angeordnet ist,
wobei die erste Lichtfalle (50, 50A) beinhaltet:
einen ersten geschlossenen Raum (51, 51A) mit einer ersten Öffnung (52, 52A), die sich in Richtung des Erfassungsbereichs (DA) öffnet; und
eine Mehrzahl von keilförmigen Vorsprüngen (115, 115a, 115b, 115c, 115d, 115e, 115f), die in dem ersten geschlossenen Raum (51, 51A) angeordnet sind, wobei die Mehrzahl von keilförmigen Vorsprüngen (115, 115a, 115b, 115c, 115d, 115e, 115f) jeweils ein dreieckiger säulenförmiger Vorsprung ist und eine Basis und ein Spitzenende beinhaltet, und
unter der Mehrzahl von keilförmigen Vorsprüngen (115, 115a, 115b, 115c, 115d, 115e, 115f), je weiter ein keilförmiger Vorsprung vom Erfassungsbereich (DA) entfernt ist, desto geringer ist ein Abstand zwischen der Basis und dem Spitzenende des keilförmigen Vorsprungs, und je weiter ein keilförmiger Vorsprung vom Erfassungsbereich (DA) entfernt ist, desto weiter entfernt vom Erfassungsbereich (DA) führt die Vorsprungsrichtung des keilförmigen Vorsprungs.

2. Teilchenerfassungssensor (1, 1A) nach Anspruch 1, wobei
eine Vorsprungsrichtung von jedem der Mehrzahl von keilförmigen Vorsprüngen (115, 115a, 115b, 115c, 115d, 115e, 115f) eine optische Achse des Lichtempfangssystems (130) schneidet.

3. Teilchenerfassungssensor (1, 1A) nach Anspruch 1 oder 2, wobei
jeder der Mehrzahl von keilförmigen Vorsprüngen (115, 115a, 115b, 115c, 115d, 115e, 115f) nach oben ragt.

4. Teilchenerfassungssensor (1, 1A) nach einem der Ansprüche 1 bis 3, weiter umfassend
eine zweite Lichtfalle (40, 40A), die in dem Erfassungsbereich (DA) gegenüber des Lichtprojektionssystems (120) angeordnet ist,
wobei die zweite Lichtfalle (40, 40A) eine Mehrzahl von zweiten Öffnungen (42, 42A, 44) beinhaltet, Licht, das von dem Lichtprojektionssystem (120) abgegeben wird und durch den Erfassungsbereich (DA) verläuft, teilt, um durch jede der Mehrzahl von zweiten Öffnungen (42, 42A, 44) zu gelangen, und das geteilte Licht einfängt.

5. Teilchenerfassungssensor (1, 1A) nach Anspruch 4, wobei
die zweite Lichtfalle (40, 40A) weiter beinhaltet:
einen zweiten geschlossenen Raum (41, 41A, 43) mit einer zweiten Öffnung (42, 42A, 44) aus der Mehrzahl der zweiten Öffnungen (42, 42A, 44); und
eine erste reflektierende Wand (112), die eine Biegung aufweist und Licht reflektiert, das durch die zweite Öffnung (42, 42A, 44) hindurchgetreten ist, um das Licht auf einen tiefen Teil des zweiten geschlossenen Raums (41, 41A, 43) zu richten.

6. Teilchenerfassungssensor (1, 1A) nach Anspruch 5, wobei
der tiefe Teil des zweiten geschlossenen Raumes (41, 41A, 43) keilförmig ist.

7. Teilchenerfassungssensor (1, 1A) nach Anspruch 5 oder 6, wobei
die zweite Lichtfalle (40, 40A) das von dem Lichtprojektionssystem (120) abgegebene und den Erfassungsbereich (DA) durchlaufende Licht unter Verwendung der ersten reflektierenden Wand (112) teilt.

8. Teilchenerfassungssensor (1, 1A) nach einem der Ansprüche 5 bis 7, wobei
die erste reflektierende Wand (112) beinhaltet:
eine erste reflektierende Komponente (112a), die eine flache, plattenförmige Komponente ist, die eine optische Achse des Lichtprojektionssystems (120) schneidend angeordnet ist; und
eine zweite reflektierende Komponente (112b), die eine flache, plattenförmige Komponente ist, die diagonal zur ersten reflektierenden Komponente (112a) angeordnet ist, und
unter dem von dem Lichtprojektionssystem (120) ausgegebenen Licht, Licht, das entlang der optischen Achse des Lichtprojektionssystems (120) wandert, in den tiefen Teil des zweiten geschlossenen Raums (41, 41A, 43) wandert, nachdem es von der ersten reflektierenden Komponente (112a) und der zweiten reflektierenden Komponente (112b) in der aufgeführten Reihenfolge reflektiert wurde.

9. Teilchenerfassungssensor (1, 1A) nach einem der Ansprüche 1 bis 8, wobei
die erste Lichtfalle (50, 50A) weiter eine zweite reflektierende Wand (113) beinhaltet, die die Vorsprungsrichtung der Mehrzahl von keilförmigen Vorsprüngen (115, 115a, 115b, 115c, 115d, 115e, 115f) schneidend und im Wesentlichen parallel zu der optischen Achse des Lichtempfangssystems (130) angeordnet ist.

10. Staubsensor, umfassend den Teilchenerfassungssensor (1, 1A) nach einem der Ansprüche 1 bis 9.

11. Rauchmelder, umfassend den Teilchenerfassungssensor (1, 1A) nach einem der Ansprüche 1 bis 9.

12. Luftreiniger, umfassend den Teilchenerfassungssensor (1, 1A) nach einem der Ansprüche 1 bis 9.

13. Lüfter, umfassend den Teilchenerfassungssensor (1, 1A) nach einem der Ansprüche 1 bis 9.

14. Klimaanlage, umfassend den Teilchenerfassungssensor (1, 1A) nach einem der Ansprüche 1 bis 9.

## Revendications

1. Capteur de détection de particules (1, 1A) comprenant :
un système de projection de lumière (120) qui émet et concentre de la lumière sur une zone de détection (DA) ;
un système de réception de lumière (130) qui reçoit de la lumière dispersée, la lumière dispersée étant de la lumière provenant du système de projection de lumière (120) qui a été dispersée par une particule dans la zone de détection (DA) ; et
un premier piège à lumière (50, 50A) disposé en travers de la zone de détection (DA) depuis le système de réception de lumière (130),
dans lequel le premier piège à lumière (50, 50A) inclut :
un premier espace fermé (51, 51A) ayant une première ouverture (52, 52A) qui s'ouvre vers la zone de détection (DA) ; et
une pluralité de saillies en forme de coin (115, 115a, 115b, 115c, 115d, 115e, 115f) disposées dans le premier espace fermé (51, 51A), la pluralité de saillies en forme de coin (115, 115a, 115b, 115c, 115d, 115e, 115f) étant chacune une saillie colonnaire triangulaire et incluant une base et une extrémité de pointe, et
parmi la pluralité de saillies en forme de coin (115, 115a, 115b, 115c, 115d, 115e, 115f), plus une saillie en forme de coin est située loin de la zone de détection (DA), moins une distance entre la base et l'extrémité de pointe de la saillie en forme de coin est grande, et plus une saillie en forme de coin est située loin de la zone de détection (DA), plus la direction saillante de la saillie en forme de coin mène loin de la zone de détection (DA).

2. Capteur de détection de particules (1, 1A) selon la revendication 1, dans lequel une direction saillante de chacune de la pluralité de saillies en forme de coin (115, 115a, 115b, 115c, 115d, 115e, 115f) coupe un axe optique du système de réception de lumière (130).

3. Capteur de détection de particules (1, 1A) selon la revendication 1 ou 2, dans lequel
chacune de la pluralité de saillies en forme de coin (115, 115a, 115b, 115c, 115d, 115e, 115f) fait saillie vers le haut.

4. Capteur de détection de particules (1, 1A) selon l'une quelconque des revendications 1 à 3, comprenant en outre
un second piège à lumière (40, 40A) disposé en travers de la zone de détection (DA) depuis le système de projection de lumière (120),
dans lequel le second piège à lumière (40, 40A) inclut une pluralité de secondes ouvertures (42, 42A, 44), divise, de manière à passer à travers chacune de la pluralité de secondes ouvertures (42, 42A, 44), de la lumière qui est émise depuis le système de projection de lumière (120) et passe à travers la zone de détection (DA), et piège la lumière divisée.

5. Capteur de détection de particules (1, 1A) selon la revendication 4, dans lequel le second piège à lumière (40, 40A) inclut en outre :
un second espace fermé (41, 41A, 43) ayant une seconde ouverture (42, 42A, 44) parmi la pluralité de secondes ouvertures (42, 42A, 44) ; et
une première paroi réfléchissante (112) qui a un coude et reflète de la lumière qui est passée à travers la seconde ouverture (42, 42A, 44) pour diriger la lumière vers une partie profonde du second espace fermé (41, 41A, 43).

6. Capteur de détection de particules (1, 1A) selon la revendication 5, dans lequel la partie profonde du second espace fermé (41, 41A, 43) est en forme de coin.

7. Capteur de détection de particules (1, 1A) selon la revendication 5 ou 6, dans lequel
le second piège à lumière (40, 40A) divise la lumière qui est émise depuis le système de projection de lumière (120) et passe à travers la zone de détection (DA) en utilisant la première paroi réfléchissante (112).

8. Capteur de détection de particules (1, 1A) selon l'une quelconque des revendications 5 à 7, dans lequel
la première paroi réfléchissante (112) inclut :
un premier composant réfléchissant (112a) qui est un composant plat en forme de plaque disposé en coupant un axe optique du système de projection de lumière (120) ; et
un second composant réfléchissant (112b) qui est un composant plat en forme de plaque disposé en diagonale par rapport au premier composant réfléchissant (112a), et
parmi la lumière émise depuis le système de projection de lumière (120), de la lumière se déplaçant le long de l'axe optique du système de projection de lumière (120) se déplace vers la partie profonde du second espace fermé (41, 41A, 43) après avoir été reflétée par le premier composant réfléchissant (112a) et le second composant réfléchissant (112b) dans l'ordre énuméré.

9. Capteur de détection de particules (1, 1A) selon l'une quelconque des revendications 1 à 8, dans lequel
le premier piège à lumière (50, 50A) inclut en outre une seconde paroi réfléchissante (113) disposée en coupant la direction saillante de la pluralité de saillies en forme de coin (115, 115a, 115b, 115c, 115d, 115e, 115f) et essentiellement parallèle à l'axe optique du système de réception de lumière (130).

10. Capteur de poussière comprenant le capteur de détection de particules (1, 1A) selon l'une quelconque des revendications 1 à 9.

11. Détecteur de fumée comprenant le capteur de détection de particules (1, 1A) selon l'une quelconque des revendications 1 à 9.

12. Purificateur d'air comprenant le capteur de détection de particules (1, 1A) selon l'une quelconque des revendications 1 à 9.

13. Ventilateur soufflant comprenant le capteur de détection de particules (1, 1A) selon l'une quelconque des revendications 1 à 9.

14. Climatiseur comprenant le capteur de détection de particules (1, 1A) selon l'une quelconque des revendications 1 à 9.
